# EUROPEAN PATENT APPLICATION

(11) **EP 1 796 339 A1**
(43) Date of publication of application: **13.06.2007**
(21) Application number: 05111861.0
(22) Date of filing: 08.12.2005
(51) Int. Cl.: H04L 29/06

(54) **Wireless mobile communication system**

(71) Applicant: Cho, Hsin-Hsu, Tianjhong Township Chang hua 520 (TW)
(72) Inventor: Cho, Hsin-Hsu, Tianjhong Township Chang hua 520 (TW)
(74) Representative: Beck, Michael Rudolf

(57) **Abstract**

The present invention provides a communication system using an authentication mechanism to authenticate a user by a password entered and transferred through hubs and gateways and a wireless network and so money is saved and multi-way communications are obtained

## Description

### Field of the invention

The present invention relates to a communication system; more particularly, relates to coordinating a wireless network and communication devices to save money and to obtain multi-way communications.

### Description of the Related Art

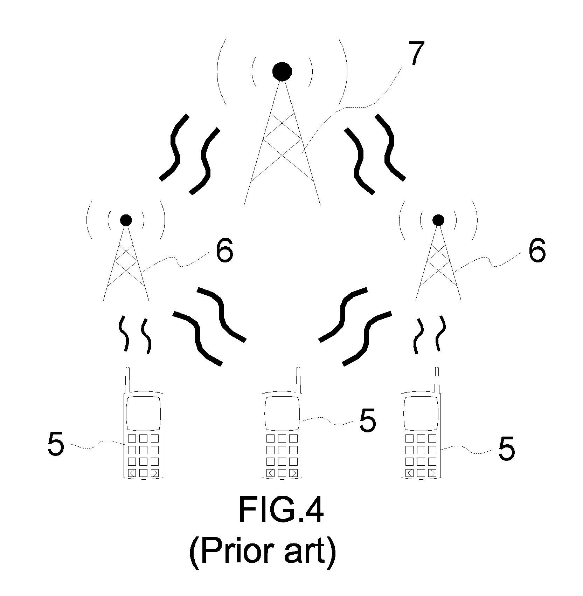

General mobile phones 5 having a GSM (Global System for Mobile Telecommunications) system, as shown in FIG.4, receive signals from and send signals to a main base station 7 through local base stations 6 and then the main base station 7 transfers the messages so that a user of a general mobile phone 5 obtains communications at any time at any place.

A base station integrates filters and exchanges signals of 900MHz (megahertz), 1800MHz, 1900MHz, 2100MHz, etc. from mobile phones 5 in a radio wave-covering area of the base station and transfers the signals. Since a general mobile phone 5 sends or receives signals in the above way, equipments required for a communication company is quite huge and complex. Therefore, a monthly rental fee, a communication fee, a short message fee, etc. are collected by the communication company and so the user pays more on using the general mobile phone 5. Hence, the prior art does not fulfill users' requests on actual use.

### Summary of the invention

The main purpose of the present invention is to obtain money saving and milti-way communication for a mobile unit through hubs and gateways coordinated with a wireless network and an authentication mechanism.

To achieve the above purpose, the present invention is a wireless mobile communication system, comprising at least one mobile unit; a plurality of hubs and gateways for transferring messages from the mobile unit; a wireless network for receiving messages from the mobile unit; and an authentication mechanism for collecting messages of the mobile unit through the hubs and gateways and the wireless network to authenticate a user's login and for informing the mobile unit about the connection status between the authentication mechanism and the mobile unit. Accordingly, a novel wireless mobile communication system is obtained.

### Brief description of the drawings

The present invention will be better understood from the following detailed descriptions of the preferred embodiments according to the present invention, taken in conjunction with the accompanying drawings, in which
- FIG.1: is a block view showing the present invention;
- FIG.2: is a view showing a first embodiment according to the present invention;
- FIG.3: is a view showing a second embodiment according to the present invention; and
- FIG.4: is a view showing a prior art.

### Description of the preferred embodiments

The following descriptions of the preferred embodiments are provided to understand the features and the structures of the present invention.

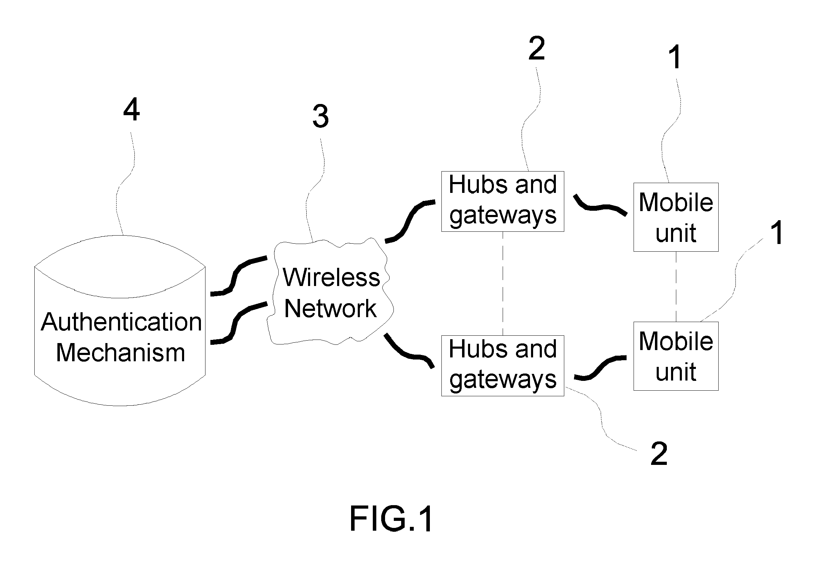

Please refer to FIG. 1, which is a block view showing the present invention. As shown in the figure, the present invention is a wireless mobile communication system, comprising at least one mobile unit, a plurality of hubs and gateways, a wireless network and an authentication mechanism, where money saving and multi-way communication are obtained through the hubs and gateways coordinated with the wireless network and the authentication mechanism.

The mobile unit 1 can be a wireless mobile phone. The hubs and gateways 2 transfer messages of the mobile unit. The wireless network 3 receives messages of the mobile unit from the hubs and gateways.

The authentication mechanism 4 is a server. The authentication mechanism 4 collects messages from the mobile unit 1 through the hubs and gateways 2 and the wireless network 3; and returns a receiving message to the mobile unit 1 through the hubs and gateways 2 and the wireless network 3 to display a connection status. Thus, the user is identified. Then, the authentication mechanism 4 informs the mobile unit about the connection status between the authentication mechanism 4 and the mobile unit 1 with periodical handshaking signals. Consequently, a novel wireless mobile communication system is obtained.

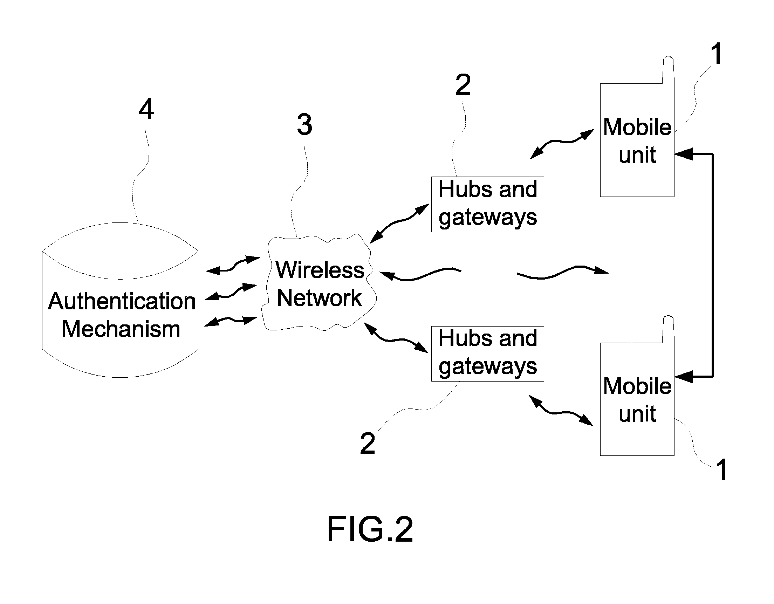

Please refer to FIG.2, which is a view showing a first embodiment according to the present invention. As shown in the figure, when using the present invention, a user inputs a password to the mobile unit 1 to be transferred. The hubs and gateways 2 transfer the password inputted by the user to the authentication mechanism 4 through the wireless network 3 so that the user can be identified by the authentication mechanism 4 with the password entered. After the user is identified the authentication mechanism 4 returns the connection status to the mobile unit 1 by the hubs and gateways 2 and the wireless network 3 while showing the user whether his login is successful. After the user is successfully logged in, the authentication mechanism 4 informs the user about the connection status between the mobile unit 1 and the authentication mechanism 4 or another user with periodical handshaking signals.

When a first user is using the mobile unit 1, the first user selects a second user from the mobile unit 1 and the mobile unit 1 sends a package to the authentication mechanism 4 through the hubs and gateways 2 and the wireless network 3. The authentication mechanism 4 then sends a request signal to the second user the first user wants to communicate with. At the time, if the second user the first user wants to communicate with is logged in to the authentication mechanism 4, the second user can choose to accept or deny the communication request.

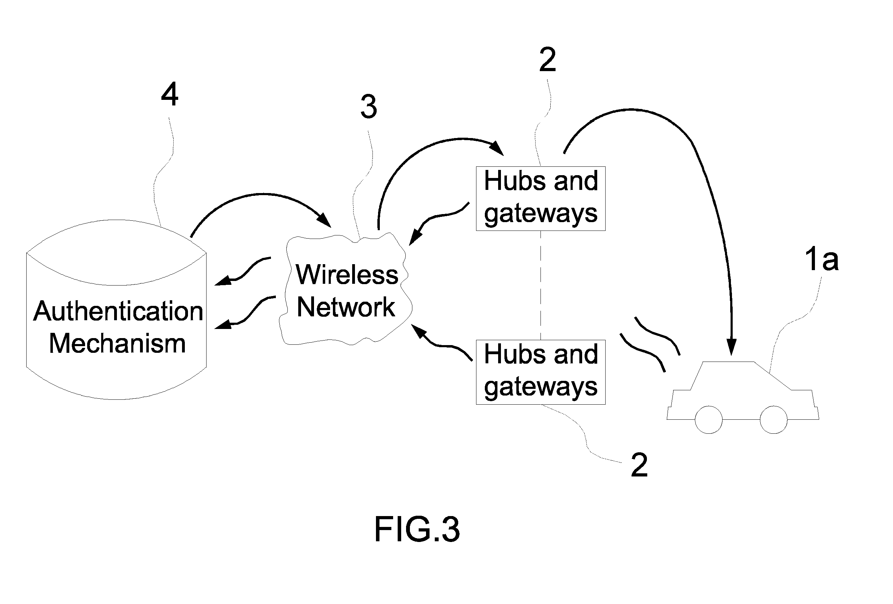

Please refer to FIG.3, which is a view showing a second embodiment according to the present invention. As shown in the figure, the mobile unit 1a according to the present invention can be an automobile. When using a mobile unit 1a of automobile, a third user inputs a password to the mobile unit 1a to be transferred. The hubs and gateways 2 transfer password inputted by the third user to the authentication mechanism 4 through the wireless network 3 so that the third user can be authenticated by the authentication mechanism 4 with the password entered. When the third user is identified, the authentication mechanism 4 returns connection status to the mobile unit 1a through the hubs and gateways 2 and the wireless network 3 while showing the third user whether his login is successful. After the user is successfully logged in, the authentication mechanism 4 informs the user about the connection status between the mobile unit 1a and the authentication mechanism 4 or another user with periodical handshaking signals. As a result, the automobile can be constantly tracked by the authentication mechanism 4 with a connection to the authentication mechanism 4 through the wireless network 3 to acquire the location of the automobile (i.e. Mobile Positioning System, MPS) so that the automobile can be located in a wireless way and the user can easily fmd the automobile if once lost.

To sum up, the present invention is a wireless mobile communication system, where the mobile unit obtains money saving and multi-way communication through the hubs and gateways coordinated with the wireless network and the authentication mechanism.

The preferred embodiments herein disclosed are not intended to unnecessarily limit the scope of the invention. Therefore, simple modifications or variations belonging to the equivalent of the scope of the claims and the instructions disclosed herein for a patent are all within the scope of the present invention.

## Claims

1. Wireless mobile communication system, comprising:
(a) at least one mobile unit (1);
(b) a plurality of hubs and gateways (2) transferring messages from said mobile unit;
(c) a wireless network (3) receiving messages from said mobile unit through said hubs and gateways; and
(d) an authentication mechanism (4) collecting messages from said mobile unit through said hubs and gateways and said wireless network to authenticate a user's login.

2. Communication system according to claim 1, wherein said mobile unit (1) is a wireless phone.

3. Communication system according to claim 1, wherein said mobile unit (1) is an automobile.

4. Communication system according to one of claims 1 to 3, wherein said authentication mechanism (4) is a server.

5. Communication system according to one of claims 1 to 4, wherein said authentication mechanism (4) periodically informs said mobile unit about the status of a connection between said authentication mechanism and said mobile unit.
